Europäisches Patentamt

(19) European Patent Office

Office européen des brevets

(11) Publication number : **0 340 873 B1**

(12) # EUROPEAN PATENT SPECIFICATION

(45) Date of publication of patent specification :
**15.07.92 Bulletin 92/29**

(51) Int. Cl.⁵ : **B29C 45/58,** B29C 47/64,
B29B 7/42

(21) Application number : **89201132.1**

(22) Date of filing : **02.05.89**

(54) **Mixer device with distribution mixing action for an extruder, an injection moulding machine and the like.**

(30) Priority : **03.05.88 NL 8801156**

(43) Date of publication of application :
**08.11.89 Bulletin 89/45**

(45) Publication of the grant of the patent :
**15.07.92 Bulletin 92/29**

(84) Designated Contracting States :
**AT CH DE ES FR GB IT LI NL**

(56) References cited :
EP-A- 0 048 590
DE-A- 2 162 709
DE-A- 2 327 540
DE-B- 1 778 515
FR-A- 1 523 602

(73) Proprietor : **UNIVERSITEIT TWENTE**
**Drienerlolaan 5**
**NL-7522 NB Enschede (NL)**

(72) Inventor : **Semmekrot, Gerardus Johannes**
**Maria**
**Gagelstraat 14**
**NL-7622 VL Borne (NL)**

(74) Representative : **Prins, Hendrik Willem et al**
**Octrooibureau Arnold & Siedsma**
**Sweelinckplein, 1**
**NL-2517 GK The Hague (NL)**

## Description

The present invention relates to a mixer device with distributive mixing action for an extruder, an injection moulding machine and the like, comprising a hollow stator, a rotor arranged for rotation in the stator and distributively acting mixing means.

Definitions of distributive mixing and dispersive mixing are given in G.M. Galle, introduction to the cavity transfer mixer, in Making the most of the cavity transfer mixer, by RAPRA technology ltd, pages 1.1-1.8, (1986).

A known mixer device is for example described in GB-A- 930,339 and GB-A- 1,475,216 and the EP-A-48,590.

With such a known mixer device of the so-called cavity transfer type the mixing means consist of mutually co-acting mixing cavities arranged in the exterior surface of the rotor and in the interior surface of the stator. These mixing cavities can be arranged peripherally in staggered rows in the rotor and stator as in the European patent application 48.590 whereby rows of mixing cavities are arranged axially staggered in the stator and rotor.

The known mixer device according to the above stated patent publications requires the arrangement of mixing cavities in the interior surface of the stator across an axial length which for an extruder is substantially equal to the mixing section of the rotor and in the case of an injection moulding machine substantially equal to the stroke length of the mixing section of the rotor. The arrangement of these mixing cavities in the interior surface of the stator entails relatively high production costs, while the mixing sections in the rotor and stator must be geared to one another, which decreases the extent of interchangeability.

Another similar mixer device is the pin mixer whereby the mixing means comprise pins arranged spread in axial planes over the interior surface of the stator which extend as far as breaks in the rotor screw thread(s).

The mixer device according to the preamble of claim 1 is known from JP-52-14659, disclosing an extruder comprising a separate mixing ring mounted for rotation around a rotor arranged within a hollow stator. An outer rotor surface facing the mixing ring is provided with a circumferentially extending row of mixing rotor grooves. The mixing ring is provided in its outer surface facing the hollow stator with two circumferentially extending rows of mixing ring grooves.

The rows of mixing ring grooves communicate each with the row of mixing rotor grooves via respective passages. In the mixing ring grooves and in the rotor grooves mixing vortices may be generated, but the material flow through the passages is substantially of the poiseuille type. Accordingly, the mixing effectivity is not optimal, although the mixing ring has a relatively complex structure.

The invention has for its object to lessen the previously mentioned drawbacks.

According to the invention this achieved by a mixing device with distributive mixing action for an extruder, injection moulding machine and the like, comprising:

    i) a hollow stator;

    ii) a rotor mounted for rotation in said stator;

    iii) at least one separate mixing ring arranged between the  stator and the rotor for free rotation around the rotor  and provided with circumferentially extending rows of mixing cavities in the mixing ring surface,

characterized in that the mixing cavities of the mixing ring comprise mixing passages extending transversally through the mixing ring, at one end substantially abutting the stator inner surface and at the other end substantially abutting the rotor outer surface.

The invention is based on the insight that such a mixing ring, as a result of the shearing forces of the viscous material present which affect it in combination with suitably chosen clearances on the outside and inside of the mixing ring, rotates at a speed of revolution less than the speed of revolution of the rotor. In practice the speed of revolution of the mixing ring has been found to be 5-20% of the speed of revolution of the rotor. This difference in the speed of revolution is sufficient for the realization of an adequate mixing action. In this way a stator with a smooth inner surface can be used.

A very simply manufactured mixing ring is obtained when preferably the mixing ring cavities are passages arranged in the mixing ring and the passages are in addition radially directed. Thus avoided is the occurrence of dead corners and degeneration of the material for mixing as the result of it remaining for too long a time in a mixing cavity, because there occurs in a mixing cavity an internal mixing as a result of the movement along the interior surface of the stator.

Should the mixing ring be provided with passages the rotor surface enclosed by the mixing ring can also be smooth, resulting in production costs being considerably lower with an equally good mixing action. With material transport in mind the passages can preferably be connected by lengthwise grooves which are more preferably arranged in a helical manner in the mixing ring surface. Thus realized is a specific adjustment of the mixer device to the material for mixing. In the case of a pin mixer the mixing means comprise pins protruding from the interior surface of the mixing ring into the space between the mixing ring and the rotor.

If after mixing of the viscous material this material is ejected using the axially slidable rotor and flowback of the material has to be avoided for this purpose, the mixing ring can be further provided with an annular valve body which co-acts with a valve seat arranged on the rotor.

The mixing ring can be arranged simply on the rotor if in preference a rotor section enclosed by the mixing ring is detachably connected to the adjoining part of the rotor.

The invention finally relates to this rotor section and to an extruder, an injection moulding machine and the like which are provided with such a mixer device or rotor section.

Mentioned and other features will be elucidated hereafter with reference to a number of embodiments of a mixer device according to the invention, which embodiments are given by way of example. Reference is made hereby to the annexed drawing.

In the drawings:

figures 1 and 2 each show respectively views of a section of an extruder and an injection moulding machine according to the invention;

figure 3 is detail III from figure 2 on a larger scale;

figure 4 shows a section along the line IV-IV from figure 3;

figures 5, and 7, each show a view corresponding to figure 3;

figures 6, and 8, each show a section along respectively line VI-VI from figure 5, and line VIII-VIII from figure 7 ;

figure 9 is a perspective view on a larger scale of the mixing ring according to the invention from figure 7, and

figure 10 is a perspective view of a variant of the mixing ring in figure 9.

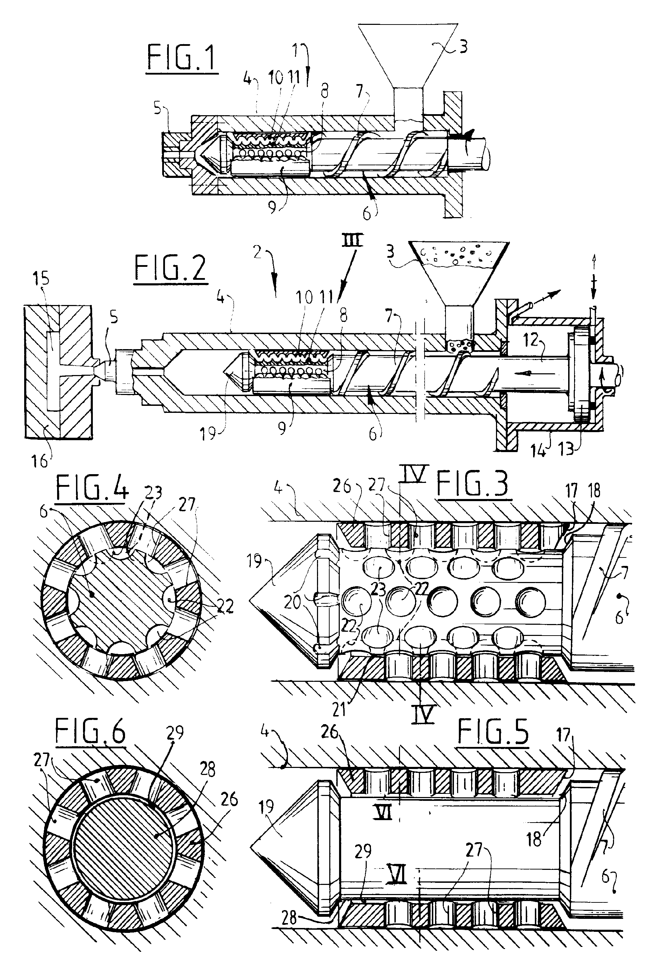

Figures 1 and 2 show respectively an extruder 1 and an injection moulding machine 2 according to the invention.

The extruder 1 comprises a hollow cylindrical stator 4 having an injection nozzle 5 and provided with a supply funnel 3. A rotatable rotor 6 is arranged in the stator 4. The rotor 6 comprises a threaded section 7 and a mixing section 8. The mixing section 8 comprises a mixing ring 9 arranged for free turning around the rotor.

Figure 2 shows the injection moulding machine 2 according to the invention. The construction elements corresponding with the extruder 1 are indicated with the same reference numerals. In this case the rotor 6 is provided with a piston rod 12 with the piston 13 which is slidably and rotatably guided in the piston chamber 14. In figure 2 the rotor 6 can execute a rotation and translation movement. During the translation mixed, viscous material is ejected into the die cavity 15 of the die 16. In order to avoid flowback of material during the injection moulding the mixing ring 9 is provided with an annular valve body 17 which co-acts with a valve seat 18 arranged on the rotor such that during injection moulding the passage between the mixing ring and the rotor is closed off by the annular valve body 17.

For optimal transport of the material along the rotor nose 19 the latter can be provided with lengthwise grooves 20 (figure 3).

Figures 3 and 4 show in more detail the mixing section of the rotor 6 from figure 2. This mixing section can also be applied in the extruder 1 according to fig. 1, with or without the annular valve body 17 with its valve seat 18.

In the narrowed rotor section 21 the rotor 6 mixing cavities 22 and 23 are arranged peripherally in staggered rows relative to each other. The mixing ring 26 is provided with radially directed passages 27 arranged therein in the same pattern. During mixing the mixing ring 26 undergoes a force in forward direction through the flow of the material for mixing which results in it being pressed against the rotor nose 19. Owing to the presence of the material and the embodiment of the contact surfaces there is little friction hereby so that the rotational speed difference between the rotor 6 and the mixing ring 26 is hardly influenced. In this situation the mixing ring passages 27 and the rotor mixing cavities 22 and 23 are axially displaced relative to each other in the configuration most favourable for mixing.

The mixing ring 26 can slide easily onto the rotor part 21 when this part is detachably fastened to the threaded section 7 of rotor 6.

This mixing ring 26 is very simple to machine manufacture.

In the variant according to figures 5 and 6 the mixing ring 26 provided with the radially directed passages 27 is located around a narrowed rotor portion 28, the surface 29 of which is smooth, in other words there are no mixing members present in the surface 29 which co-act with the passages 27.

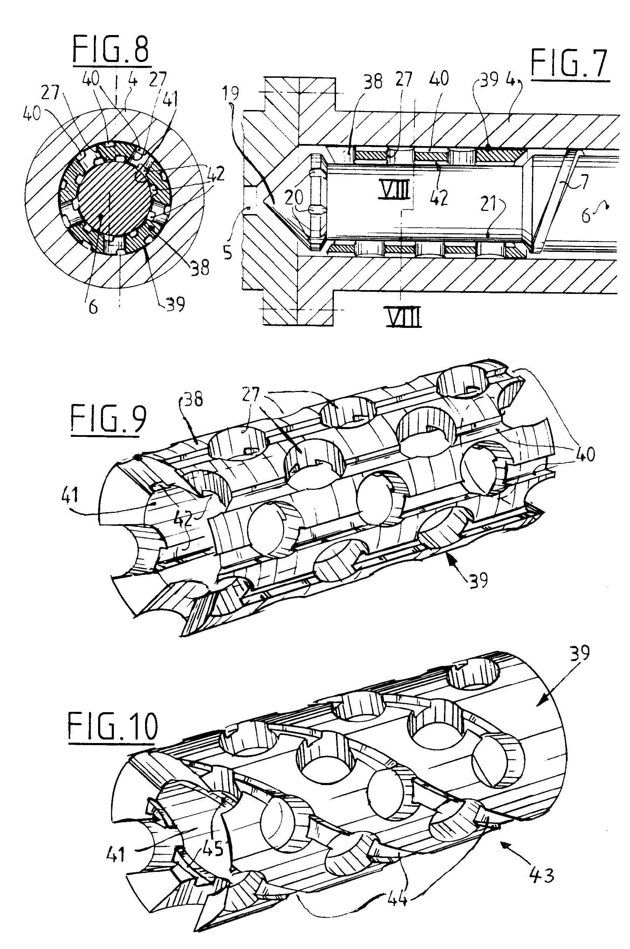

In the variant according to figures 7-9 the mixing ring 38 is provided with radially directed passages 27 which are connected to each other by means of longitudinal grooves 40 arranged in the external surface 39 and longitudinal grooves 42 arranged in the interior surface 41.

By using passages 27 connected by longitudinal grooves 41 and 42 a narrowed rotor portion 21 with a smooth exterior surface can also be used in this case.

Finally, figure 10 shows a variant whereby the mixing ring 43 is provided on its exterior surface 39 with helically arranged longitudinal grooves 44 and on its interior surface 41 with helically arranged longitudinal grooves 45. The lengthwise grooves 44 and 45 have opposing thread directions. In order to avoid flow-back of material along the lengthwise grooves 44 and 45 during injection moulding the lengthwise grooves 44 and 45 do not communicate with the valve body 17.

It is possible to use in the mixing rings 26 rows of passages that are not mutually staggered. Accordingly, there are axial strips of material between the rows which results in an increase of the compression strength of the mixing ring.

The mixer device according to the invention can be used for mixing viscous materials such as melted plastics and rubber, materials such as soap and clay in addition to foodstuffs such as dough and margarine.

## Claims

1. Mixer device (1, 2, 8) with distributive mixing action for for instance an extruder and an injection moulding machine comprising:
   i) a hollow stator (4);
   ii) a rotor (6) mounted for rotation in said stator (4);
   iii) at least one separate mixing ring (26, 38, 43) arranged between the stator (4) and the rotor (6) for free rotation around the rotor (6) and provided with circumferentially extending rows of mixing cavities in the mixing ring surface,
characterized in that the mixing cavities of the mixing ring (26, 38, 43) comprise mixing passages (27) extending outwardly through the mixing ring (26, 38, 43), at one end substantially abutting the stator inner surface and at the other end substantially abutting the rotor outer surface.

2. Mixer device (1, 2, 8) as claimed in claim 1, wherein the mixing passages (27) are of the cylindrical form.

3. Mixer device (1, 2, 8) as claimed in claim 1 or 2, wherein the mixing passages (27) are radially oriented in the mixing ring (26, 38, 43).

4. Mixer device (1, 2, 8) as claimed in claims 1-3, wherein the mixing passages (27) of adjacent circumferentially extending rows are axially aligned.

5. Mixer device (1, 2, 8) as claimed in claims 1-4, wherein the exterior surface of the rotor facing the mixing ring inner surface provided with the mixing passages is smooth.

6. Mixer device (1, 2, 8) as claimed in claims 1-4, wherein the exterior surface (29) of the rotor (6) facing the mixing ring inner surface provided with the mixing passages (27), is provided with circumferentially extending rows of mixing cavities (22, 23).

7. Mixer device (1, 2, 8) as claimed in claim 6, wherein adjacent rows of mixing cavities (22, 23) are staggered.

8. Mixer device (1, 2, 8) as claimed in claims 1-7, wherein the mixing passages (27) in the mixing ring (26, 38, 43) are mutually connected by longitudinal grooves (40; 42, 45) arranged in the outer and/or inner mixing ring surface (39; 41).

9. Mixer device (1, 2, 8) as claimed in claim 8, wherein the longitudinal grooves (44, 45) are arranged in helical manner in the mixing ring surface (41).

10. Mixer device (1, 2, 8) as claimed in claim 9, in which the rotational directions of the helically arranged longitudinal grooves (44, 45) in the outer and inner ring surfaces (39; 41) are opposing.

11. Mixer device (1, 2, 8) as claimed in claims 1-10, in which the mixing ring (26) is provided with an annular valve body (17) that co-acts with a valve seat (18) arranged on the rotor (6).

12. Mixer device (1, 2, 8) as claimed in claims 1-11, in which a rotor section enclosed by the mixing ring (26, 38, 43) is detachably connected to the adjoining part of the rotor (6).

13. Mixer device (1, 2, 8) as claimed in claims 1-12, wherein the mixing ring (26, 38, 43) is arranged around a narrowed portion (21) of the rotor (6).

14. Rotor section integratable in a mixer device (1, 2, 8) with distribute mixing action, as claimed in claims 1-13, comprising:
   i) a rotor part detachably connectable to an adjoining part of a rotor (6) of the mixer device (1, 2, 8); and
   ii) a mixing ring (26, 38, 43) enclosing the rotor part and arranged for free rotation around the rotor part, the mixing ring (26, 38, 43) comprising circumferentially extending rows of mixing passages (27) extending outwardly through the mixing ring (26, 38, 43) at one end substantially abutting the rotor part outer surface and at the other end to abut substantially a stator inner surface of a stator of the mixer device (1, 2, 8).

15. Extruder (1) comprising:
   i) a hollow stator (4);
   ii) a rotor (6) mounted for rotation in said stator (4);
   iii) at least one separate mixing ring (26, 38, 43) arranged between the stator (4) and the rotor (6) for free rotation around the rotor (6) and provided with circumferentially extending rows of mixing cavities in the mixing ring surface, and
characterized by a mixer device (1, 2, 8) according to claims 1-13.

16. Injection moulding machine (2), comprising:
   i) a hollow stator (4);
   ii) a rotor (6) mounted for rotation in said stator (4);
   iii) at least one separate mixing ring (26, 38, 43) arranged between the stator (4) and the rotor (6) for free rotation around the rotor (6) and provided with circumferentially extending rows of mixing cavities in the mixing ring surface, and
characterized by a mixer device (1, 2, 8) according to claims 1-13.

## Patentansprüche

1. Mischvorrichtung (1, 2, 8) mit verteilender Mischwirkung für beispielsweise einen Extruder und eine Spritzformmaschine, mit:
   i) einem hohlen Stator (4);
   ii) einem in dem Stator (4) drehbar angebrachten Rotor (6);

iii) wenigstens einem gesonderten Mischring (26, 38, 43), der zwischen dem Stator (4) und dem Rotor (6) für eine freilaufende Drehung um den Rotor (6) angeordnet ist und mit sich in Umfangsrichtung erstreckenden Reihen von Mischhohlräumen in der Mischringfläche versehen ist, dadurch gekennzeichnet, daß die Mischhohlräume des Mischringes (26, 38, 43) Mischdurchgänge (27) aufweisen, die sich nach außen durch den Mischring (26, 38, 43) erstrecken und an einem Ende im wesentlichen an die Innenfläche des Stators angrenzen und an dem anderen Ende im wesentlichen an die Außenfläche des Rotors angrenzen.

2. Mischvorrichtung (1, 2, 8) nach Anspruch 1, bei welcher die Mischdurchgänge (27) von zylindrischer Gestalt sind.

3. Mischvorrichtung (1, 2, 8) nach Anspruch 1 oder 2, bei welcher die Mischdurchgänge (27) in dem Mischring (26, 38, 43) radial ausgerichtet sind.

4. Mischvorrichtung (1, 2, 8) nach Ansprüchen 1-3, bei welcher die Mischdurchgänge (27) benachbarter Umfangsreihen axial aufeinander ausgerichtet sind.

5. Mischvorrichtung (1, 2, 8) nach Ansprüchen 1-4, bei welcher die Außenfläche des Rotors, die der mit den Mischdurchgängen versehenen Innenfläche des Mischringes zugewandt ist, glatt ist.

6. Mischvorrichtung (1, 2, 8) nach Ansprüchen 1-4, bei welcher die Außenfläche (29) des Rotors (6), die der mit den Mischdurchgängen (27) versehenen Innenfläche des Mischringes zugewandt ist, mit Umfangsreihen von Mischhohlräumen (22, 23) versehen ist.

7. Mischvorrichtung (1, 2, 8) nach Anspruch 6, bei welcher benachbarte Reihen von Mischdurchgängen (22, 23) auf Lücke gegeneinander versetzt sind.

8. Mischvorrichtung (1, 2, 8) nach Ansprüchen 1-7, bei welcher die Mischdurchgänge (27) in dem Mischring (26, 38, 43) über in der äußeren und/oder der inneren Mischringfläche (39; 41) ausgebildete Längsnuten (40; 42, 45) miteinander verbunden sind.

9. Mischvorrichtung (1, 2, 8) nach Anspruch 8, bei welcher die Längsnuten (44, 45) in der Mischringfläche (41) schraubenlinienförmig ausgebildet sind.

10. Mischvorrichtung (1, 2, 8) nach Anspruch 9, bei welcher die Drehrichtungen der schraubenlinienförmig ausgebildeten Längsnuten (44, 45) in der äußeren und in der inneren Ringoberfläche (39; 41) gegensinnig sind.

11. Mischvorrichtung (1, 2, 8) nach Ansprüchen 1-10, bei welcher der Mischring (26) mit einem ringförmigen Ventilkörper (17) versehen ist, der mit einem auf dem Rotor (6) angeordneten Ventilsitz (18) zusammenwirkt.

12. Mischvorrichtung (1, 2, 8) nach Ansprüchen 1-12, bei welcher ein von dem Mischring (26, 38, 43) umgebener Rotorabschnitt an den angrenzenden Teil des Rotors (6) lösbar angeschlossen ist.

13. Mischvorrichtung (1, 2, 8) nach Ansprüchen 1-12, bei welcher der Mischring (26, 38, 43) rings eines im Durchmesser verkleinerten Abschnitts (21) des Rotors (6) angeordnet ist.

14. Rotorabschnitt, der in eine Mischvorrichtung (1, 2, 8) mit verteilender Mischwirkung nach Ansprüchen 1-13 integrierbar ist, mit:

i) einem Rotorteil, der lösbar an einen angrenzenden Teil eines Rotors (6) der Mischvorrichtung (1, 2, 8) anschließbar ist, und

ii) einem Mischring (26, 38, 43), der den Rotorteil umgibt und um den Rotorteil frei drehbar angeordnet ist, wobei der Mischring (26, 38, 43) Umfangsreihen von Mischdurchgängen (27) aufweist, die sich nach außen durch den Mischring (26, 38, 43) an einem Ende im wesentlichen an der Außenfläche des Rotorteils und an dem anderen Ende im wesentlichen an einer Statorinnenfläche eines Stators der Mischvorrichtung (1, 2, 8) erstrecken.

15. Extruder (1) mit:

i) einem hohlen Stator (4);

ii) einem in dem Stator (4) drehbar montierten Rotor (6);

iii) wenigstens einem gesonderten Mischring (26, 38, 43), der zwischen dem Stator (4) und dem Rotor (6) für eine freie Rotation um den Rotor (6) angeordnet ist und mit Umfangsreihen von Mischhohlräumen in der Mischringoberfläche versehen ist, gekennzeichnet durch eine Mischvorrichtung (1, 2, 8) nach Ansprüchen 1-13.

16. Spritzformmaschine (2) mit:

i) einem hohlen Stator (4);

ii) einem in dem Stator (4) drehbar montierten Rotor (6);

iii) wenigstens einem gesonderten Mischring (26, 38, 43), der zwischen dem Stator (4) und dem Rotor (6) für eine freie Rotation um den Rotor (6) angeordnet ist und mit Umfangsreihen von Mischhohlräumen in der Mischringoberfläche versehen ist, gekennzeichnet durch eine Mischvorrichtung (1, 2, 8) nach Ansprüchen 1-13.

## Revendications

1. Mélangeur (1, 2, 8) à mélange par distribution pour une extrudeuse ou une machine à mouler par injection, par exemple, comprenant :

i) un stator creux (4) ;

ii) un rotor (6) monté en rotation dans ledit stator (4);

iii) au moins un anneau de mélange séparé (26, 38, 43) disposé entre le stator (4) et le rotor (6) pour tourner librement autour du rotor (6) et pourvu de rangs de cavités de mélange s'étendant sur la circonférence, dans la surface de l'anneau de mélange,

caractérisé en ce que les cavités de mélange de l'anneau de mélange (26, 38, 43) comprennent des passages de mélange (27) s'étendant vers l'extérieur à travers l'anneau de mélange (26, 38, 43), venant sensiblement en butée contre la surface interne du stator à une extrémité, et venant sensiblement en butée contre la surface externe du rotor à l'autre extrémité.

2. Mélangeur (1, 2, 8) selon la revendication 1, dans lequel les passages de mélange (27) sont de forme cylindrique.

3. Mélangeur (1, 2, 8) selon la revendication 1 ou 2, dans lequel les passages de mélange (27) sont orientés radialement dans l'anneau de mélange (26, 38, 43).

4. Mélangeur (1, 2, 8) selon les revendications 1 à 3, dans lequel les passages de mélange (27) de rangs adjacents s'étendant sur la circonférence sont alignés axialement.

5. Mélangeur (1, 2, 8) selon les revendications 1 à 4, dans lequel la surface externe du rotor faisant face à la surface interne de l'anneau de mélange munie des passages de mélange, est lisse.

6. Mélangeur (1, 2, 8) selon les revendications 1 à 4, dans lequel la surface externe (29) du rotor (6) faisant face à la surface interne de l'anneau de mélange munie des passages de mélange (27), est pourvue de rangs de cavités de mélange (22, 23) s'étendant sur la circonférence.

7. Mélangeur (1, 2, 8) selon la revendication 6, dans lequel les rangs adjacents de cavités de mélange (22, 23) sont décalés.

8. Mélangeur (1, 2, 8) selon les revendications 1 à 7, dans lequel les passages de mélange (27) dans l'anneau de mélange (26, 38, 43) sont reliés les uns aux autres par des rainures longitudinales (40 ; 42, 45) disposées dans la surface externe et/ou interne de l'anneau de mélange (39 ; 41).

9. Mélangeur (1, 2, 8) selon la revendication 8, dans lequel les rainures longitudinales (44, 45) sont disposées en hélice dans la surface de l'anneau de mélange (41).

10. Mélangeur (1, 2, 8) selon la revendication 9, dans lequel les directions de rotation des rainures longitudinales (44, 45) disposées en hélice dans la surface externe et interne de l'anneau (39 ; 41) sont opposées.

11. Mélangeur (1, 2, 8) selon les revendications 1 à 10, dans lequel l'anneau de mélange (26) est pourvu d'un corps annulaire de soupape (17) qui agit conjointement à un siège de soupape (18) disposé sur le rotor (6).

12. Mélangeur (1, 2, 8) selon les revendications 1 à 11, dans lequel une partie de rotor entourée par l'anneau de mélange (26, 38, 43) est liée de façon amovible à la partie contigue du rotor (6).

13. Mélangeur (1, 2, 8) selon les revendications 1 à 12, dans lequel l'anneau de mélange (26, 38, 43) est disposé autour d'une partie rétrécie (21) du rotor (6).

14. Partie de rotor pouvant être intégrée dans un mélangeur (1, 2, 8) à mélange par distribution selon les revendications 1 à 13, comprenant :

i) une partie de rotor pouvant être liée de façon amovible à une partie contigue d'un rotor (6) du mélangeur (1, 2, 8) ; et

ii) un anneau de mélange (26, 38, 43) entourant la partie de rotor et pouvant tourner librement autour de la partie de rotor, l'anneau de mélange (26, 38, 43) comprenant des rangs de passages de mélange (27) sur la circonférence, s'étendant vers l'extérieur à travers l'anneau de mélange (26, 38, 43), venant sensiblement en butée contre la surface externe de la partie de rotor à une extrémité, et venant sensiblement en butée contre la surface interne du stator du mélangeur (1, 2, 8) à l'autre extrémité.

15. Extrudeuse (1) comprenant :

i) un stator creux (4) ;

ii) un rotor (6) monté en rotation dans ledit stator (4);

iii) au moins un anneau de mélange séparé (26, 38, 43) disposé entre le stator (4) et le rotor (6) pour tourner librement autour du rotor (6) et pourvu de rangs de cavités de mélange s'étendant sur la circonférence, dans la surface de l'anneau de mélange, et

caractérisé par un mélangeur (1, 2, 8) selon les revendications 1 à 13.

16. Machine à mouler par injection (2), comprenant :

i) un stator creux (4) ;

ii) un rotor (6) monté en rotation dans ledit stator (4) ;

iii) au moins un anneau de mélange séparé (26, 38, 43) disposé entre le stator (4) et le rotor (6) pour tourner librement autour du rotor (6) et pourvu de rangs de cavités de mélange s'étendant sur la circonférence, dans la surface de l'anneau de mélange, et

caractérisé par un mélangeur (1, 2, 8) selon les revendications 1 à 13.

EP 0 340 873 B1

FIG.1

FIG.2

FIG.4

FIG.3

FIG.6

FIG.5

7

FIG.8

FIG.7

FIG.9

FIG.10